## Europäisches Patentamt
## European Patent Office
## Office européen des brevets

(19)

(11) Publication number: **0 123 248**
**A2**

(12)

# EUROPEAN PATENT APPLICATION

(21) Application number: **84104275.7**

(51) Int. Cl.³: **G 06 F 13/00**

(22) Date of filing: **16.04.84**

(30) Priority: **26.04.83 US 488780**

(43) Date of publication of application:
**31.10.84 Bulletin 84/44**

(84) Designated Contracting States:
**AT BE CH DE FR GB IT LI LU NL SE**

(71) Applicant: **TANDY CORPORATION**
**1000 Two Tandy Center**
**Fort Worth Texas 76102(US)**

(72) Inventor: **Gaulke, Gerald Eugene**
**1308 Timber Valley**
**Lewisville Texas 75028(US)**

(74) Representative: **Modiano, Guido et al,**
**MODIANO, JOSIF, PISANTY & STAUB Modiano &**
**Associati Via Meravigli, 16**
**I-20123 Milan(IT)**

(54) **Expandable mapped memory control.**

(57) Memory mapping circuitry for a computer random access memory is disclosed in which memory size can be increased in discrete steps by inserting additional memory integrated circuits and connecting appropriate jumper wires. At each memory size, the mapping circuitry allows full use of the available memory yet prevents a user from accessing non-existing memory locations. The mapping circuitry can also configure the memory into four configurations each of which can be selected under software control. Memory mapping is performed by two programmable array logic circuits. One of the circuits is permanently connected to the memory mapping circuitry and is equipped with jumper terminals to tailor the mapping circuitry to the memory size. The other programmable array logic circuit is inserted only if the largest memory size is used.

Fig.1

0123248

## Expandable Mapped Memory Control

This invention relates to computer memory systems and more particularly to circuitry for mapping or translating address signals provided to a computer memory.

Computer systems typcially contain a central processing unit, a memory unit and an input/output unit. The central processing unit performs the actual calculations or data manipulations. The program for running the central processing unit and the data is stored in the memory unit. The input/output units are used to transfer information to the computer system for an external environment and to transfer the results of data calculations and manipulations from the computer system to the external environment.

The memory unit may be either a read-only memory or a random access memory. In a read-only memory, information is stored in the memory during its construction and the stored information can only be "read" by the central processing unit during the computer system operation. In a random access memory, information may be stored or "written" into memory locations by the central processing unit during the computer system operation and may also be read from various locations by the central processing unit.

The particular location in the memory unit into which data is to be written or from which data is to be read is specified or "accessed" by means of a unique set of digital signals called "address" signals which are produced on a plurality of address leads by circuitry in the central processing unit. The central processing unit also produces coded data signals which can be stored in the memory unit on a plurality of leads called "data" leads. During a "read" operation information is transferred from the memory unit to the central processing unit over either the same data leads or a different set of leads.

Each particular central processing unit has a fixed number of data and address leads. For example, a common processor has eight data leads (usually termed an "8-bit" processor) and sixteen address leads. Each of the address leads can be provided with a binary signal which is either of two values (normally termed as "0" and "1"). With sixteen data leads, each of which is capable of carrying two different signals, it is possible to construct 65,536 separate codes each of which can access a single location in the memory unit. A memory unit having this number of locations is typically designated as a "64K" memory unit. Memory units of various sizes may operate with each particular microprocessor. For example, other typical memory sizes are 16K, 32K and 128K memories, which have 16,384, 32,768 and 131,072 memory locations, respectively.

It is often desirable to use a memory unit which has more memory spaces than can be directly addressed by a central processing unit with a fixed number of address leads. For example, it may be desirable to use a memory unit of 128K size with an 8-bit central processing unit which has sixteen address leads and therefore can only directly address a memory of 64K size. In order to do this, a prior art technique "memory mapping" has been developed.

In order to use this technique, a memory is divided into "blocks" or "banks" and each bank is assigned a unique code. The address lead connections between the memory and the processor are disconnected and memory mapping circuitry is interposed between the central processing unit and the memory. During normal processing operations, if the processor desires to access information stored in a particular block, the code for that block is stored in a separate register. The memory mapping circuitry responds both to the address signals produced by the central processing unit on its address leads and to the code stored in the register. In response to the code the memory mapping circuitry accesses the memory block or bank associated with the code stored in the register. The address signals produced by the central processing unit cause the mapping circuitry to access a particular location within the selected block. The block specified by the code stored in the register is said to be "mapped" into central processing unit's memory space.

This prior art mapping system works well in systems in which the memory size which will be used with a particular microprocessor is fixed. However, in many modern day systems it is advantageous to have a particular central processing unit operate with a variety of memory sizes which are available at the option of the user. For example, it may be desirable to have an 8-bit processor which can operate with a 16K, 64k, 128K or other memory sizes.

One problem with the prior art memory mapping system occurs when they must operate with variable memory sizes. In this case it is generally possible (in systems which have less than the maximum memory size) for the user to attempt to access a memory location which does not physically exist in the memory. If such an attempt is made, the system usually stops its operation and an error condition results. Often this error condition is such that the system cannot be easily restarted and must be totally reset. In other conventional systems, the memory mapping circuitry is arranged so that an automatic reset occurs when an attempt is made to access a non-existent memory location. Still, other prior art systems provided all of the physical memory but restrict access to portions of the memory in order to produce smaller type systems. In this type of system if an access is attempted to a restricted location a predetermined error routine is followed. This latter system has the advantage that a total system failure or "crash" does not occur on an improper access but it is expensive because the entire memory must be physically provided even though it cannot be utilized by the user in a small memory system.

It is therefore an object of the present invention to provide memory mapping apparatus in which a given central processing unit can be provided with variable size memory units easily and efficiently.

It is another object of the present invention to provide memory mapping apparatus in which an access to a non-existent memory location does not cause a total system failure.

It is yet another object of the present invention to provide memory mapping apparatus in which the total physical memory is available to the user regardless of the memory size.

It a further object of the present invention to provide memory mapping apparatus in which different memory size systems can be easily and quickly accommodated by simple changes which may be made by manufacturing personnel.

It is still another object of the present invention to provide memory mapping apparatus which uses common mapping circuitry to accomodate different memory sizes.

The foregoing problems are solved and the foregoing objects are achieved in one illustrative embodiment of the invention in which memory mapping is performed by circuitry contained in two separate programmable array logic modules. One module is permanently connected to the memory mapping circuitry and is equipped with jumper terminals which can be interconnected in various ways to tailor the mapping circuitry for operation with various memory sizes. The second module is only inserted into the memory mapping circuitry when the largest memory size is used.

Improper accesses are avoided because the first module ignores attempts in small memory size systems to access unavailable locations due to the jumper connections and the second module is not present and thus generates no improper control signals in response to improper access attempts.

Figure 1 is a block schematic diagram of a portion of a typical computer system including the central processing unit and ROM memories.

Figure 2 of the drawing is a block schematic diagram of the inventive memory mapping circuitry connected to a random access memory.

Figure 3 of the drawing is a block schematic diagram of the internal arrangement of the random access memory in the illustrative embodiment.

Figure 4 of the drawing is a schematic diagram representing illustrative divisions of the memory in the inventive system into blocks and the mapping of the memory blocks in several configurations.

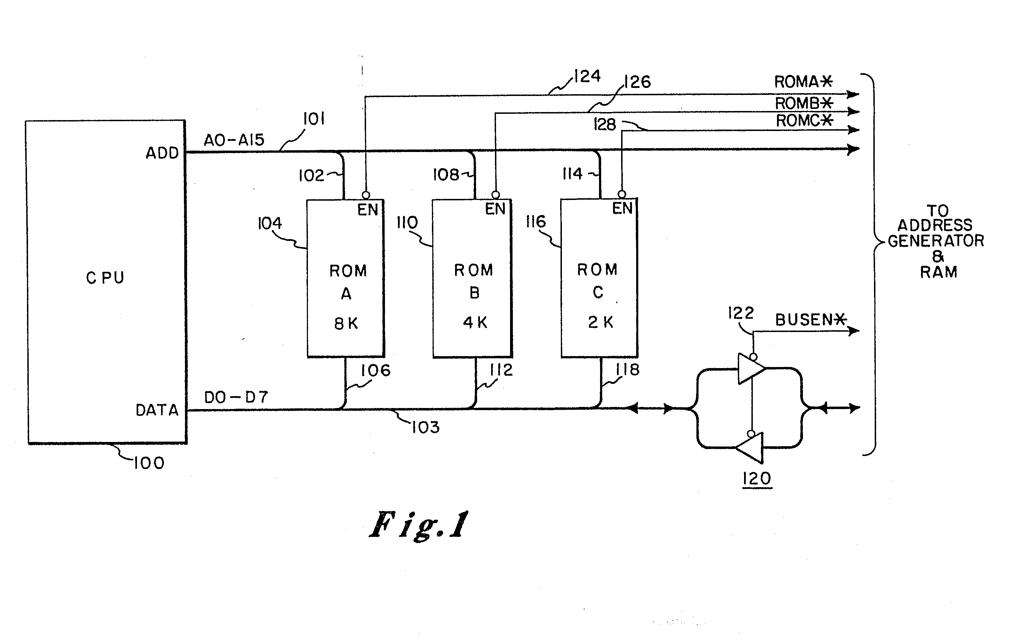

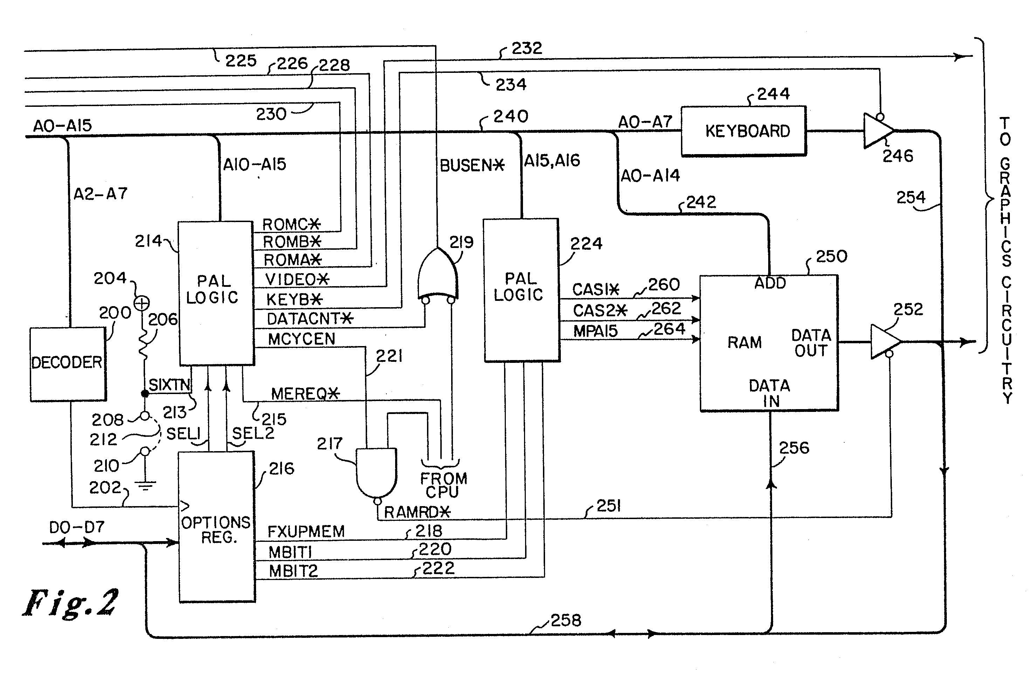

Figures 1 and 2 of the drawing show a block schematic diagram of a typical microcomputer system consisting of central processing unit (CPU) 100, read only memory (ROM) units 104, 110 and 116 and random access memory (RAM) array 250. The illustrative memory management circuitry consists of programmable array logic (PAL) modules 214 and 224, options register 216 and associated circuitry.

CPU 100 has a plurality of leads which it uses to communicate with and control its environment. These leads include address leads and data leads. In a typical 8-bit CPU such as CPU 100 there are 16 address leads designated A0-A15. These leads are shown collectively as bus 101. Although bus 101 is shown as a single dark line it actually consists of 16 separate wires.

In addition, CPU 100 has eight data leads designated D0-D7 shown collectively as bus 103. The internal details of CPU 100 are conventional and well-known and will not be described further herein. A CPU suitable for use with the illustrative embodiment is a model Z8400 Z80 CPU central processing unit manufactured by Zilog, Incorporated located at 1315 Dell Drive, Campbell, California 95008. The construction and operation of this device is conventional and explained in detail in literature available from Zilog, Incorporated.

The address leads contained in bus 101 are provided to three ROM units designated as ROM A, ROM B and ROM C (units 104, 110 and 116, respectively). The illustrative embodiment has a total of 14K of read-only memory. ROM unit 104 contains 8K of read-only memory, ROM unit 110 contains 4K of read-only memory and ROM unit 116 contains 2K of read-only memory. The amount of read-only memory is immaterial with respect to the invention and other sizes could be substituted.

ROM unit 104 is connected to address bus 101 by means of bus 102 and in response to address signals on bus 101 it produces data signals corresponding to stored information on leads 106 which are connected, in turn, to data bus 103. Similarly, ROM units 110 and 116 are connected to address bus 101 by busses 108 and 114 and to data bus 103 by busses 112 and 118.

ROM units 104, 110 and 116 are enabled to respond to address signals by enable signals on leads 124, 126 and 128, respectively. ROM units 104, 110 and 116 are internally arranged so that when they are not enabled their outputs assume a high impedance state and the units are thus virtually disconnected from data bus 103. Enable signals on leads 124, 126 and 128 designated as signals ROMA*, ROMB* and ROMC* are provided from the illustrative memory mapping circuitry as will hereinafter be described (an asterisk following the signal name indicates that the signal is normally in a "high" state and is active when in its "low" state; signal names without asterisks are normally "low" and active when "high"). ROM units 104, 110 and 116 are conventional and will not be described further herein. Units suitable for use with the illustrative embodiment are Models SCM92227, SCM91619, SCM95999 (ROM A, ROM B, and ROM C, respectively) manufactured by Motorola Semiconductor Products, Inc., 3501 Ed Bluestein Boulevard, Austin, Texas, 78721.

Portions of address bus 101 are also connected to PAL units 214 and 224, keyboard 244 and RAM array 250. Similarly, data bus 103 can be connected to other portions of the circuitry by means of driver unit 120. Driver unit 120 contains bi-directional drivers for each lead in bus 103 which are enabled by a "low" signal on lead 122 (the BUSEN* signal) which is generated by the illustrative memory mapping circuitry as will be hereinafter described.

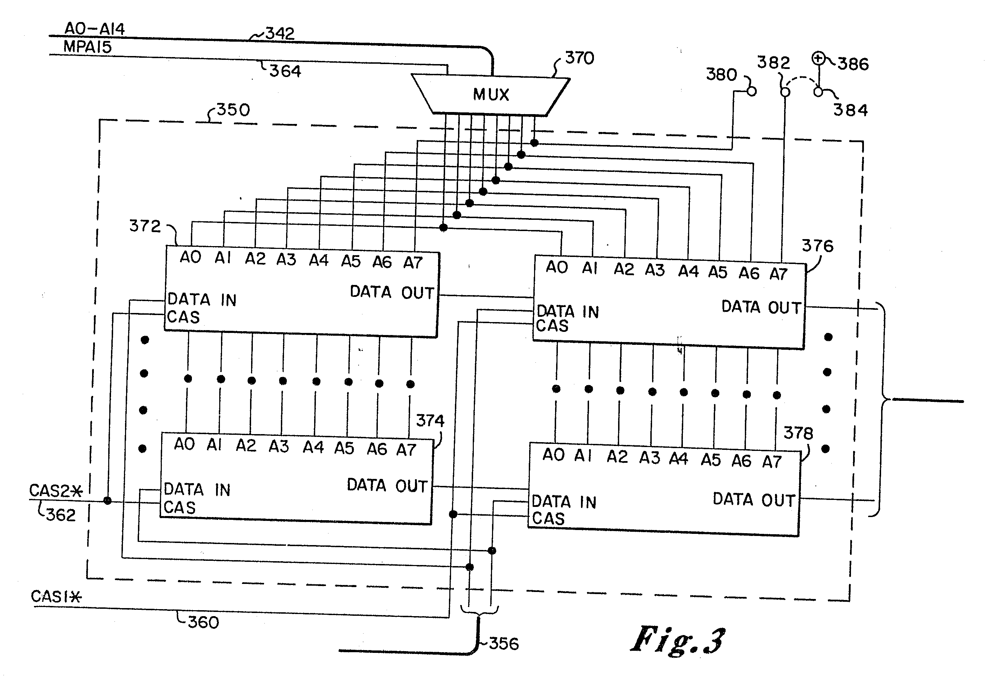

Figure 2 shows RAM array 250 with its associated memory mapping circuitry. In the illustrative embodiment, the RAM array may be arranged in three sizes, 16K, 64K and 128K, although other sizes may be used in accordance with the inventive principles herein. A more detailed diagram of RAM array 250 is shown in Figure 3 and its configuration in the three sizes will be explained in more detail below. Memory 250 is provided with address information by bus 242 from address bus 240. In addition, memory 250 may be provided with data to be written into specified locations via bus 256 which is connected to data bus 258. Stored data retrieved from memory 250 is provided, via driver 252, to either data bus 258 or to graphics display circuitry (not shown). The graphics display circuitry is of conventional design and for reasons of clarity is not discussed in detail herein. Driver 252 can be controlled by means of the RAMRD* signal on lead 251 by the illustrative memory mapping circuitry as will hereinafter be described.

Also connected to address bus 240 is a keyboard unit 244. Keyboard unit 244 is a conventional unit which has a matrix keyboard consisting of row and column conductors. Address leads A0-A7 are connected to the columns of keyboard 244 and are strobed sequentially by CPU 100. Depression of any key associated with the strobed column causes the signal on the corresponding row to become "low". The "low" row signal is provided to the CPU to indicate which key has been depressed, via buffer gate 246 to the data bus 258 via bus 254 under control of the KEYB* signal generated by the memory mapping circuitry.

The inventive memory mapping circuitry consists of PAL module 214, PAL module 224 and options register 216. PAL module 214 is permanently connected in the memory mapping circuitry. The memory mapping circuitry is connected to an integrated circuit socket for PAL module 224. In accordance with the invention, PAL module 214 is provided with jumper terminals 208 and 210 for tailoring its operation to different memory sizes (16K and 32K) and PAL module 224 is only physically inserted into the socket when the memory size is 128K in the illustrative embodiment.

PAL modules 214 and 224 are well-known logic devices which contain a repetitive array of logic gates that may be connected in a variety of ways to produce a custom-designed logic circuit. The unit is "programmed" into a permanent logic circuit configuration by means of a computer which severs internal links by passing currents through them in accordance with a "program" in a conventional and well-known manner. PAL module 214 may illustratively be a model H05370 manufactured by Monolithic Memories, Incorporated located at 1165 East Arques Avenue, Sunnyvale, California 94086-9960. The PAL inputs and outputs are related by the programming equations and mapping instructions set forth in Appendix A hereto. Similarly, PAL module 224 may illustratively be a model H05372 manufactured by Monolithic Memories, Incorporated. PAL module 224 inputs and outputs are related by the programming equations and mapping instructions set forth in Appendix B hereto.

PAL module 214 receives several inputs. Some of these inputs consist of address leads A10-A15 provided from address bus 240. PAL module 214 also receives two signals, SEL1 and SEL2, generated by options register 216 as will hereinafter be described. A further signal, SIXTN, is provided, via lead 213, by connecting jumpers from terminals 208 and 210 in accordance with the memory size option selected by the user. In addition, module 214 receives a "low" signal on MEREQ* lead 215 during a memory operation (a memory read or write) from CPU 100. Another signal, EXTMEM*, may be provided on an input (not shown) to disable the PAL module if another memory mapping circuit external to the illustrative circuit is to be used.

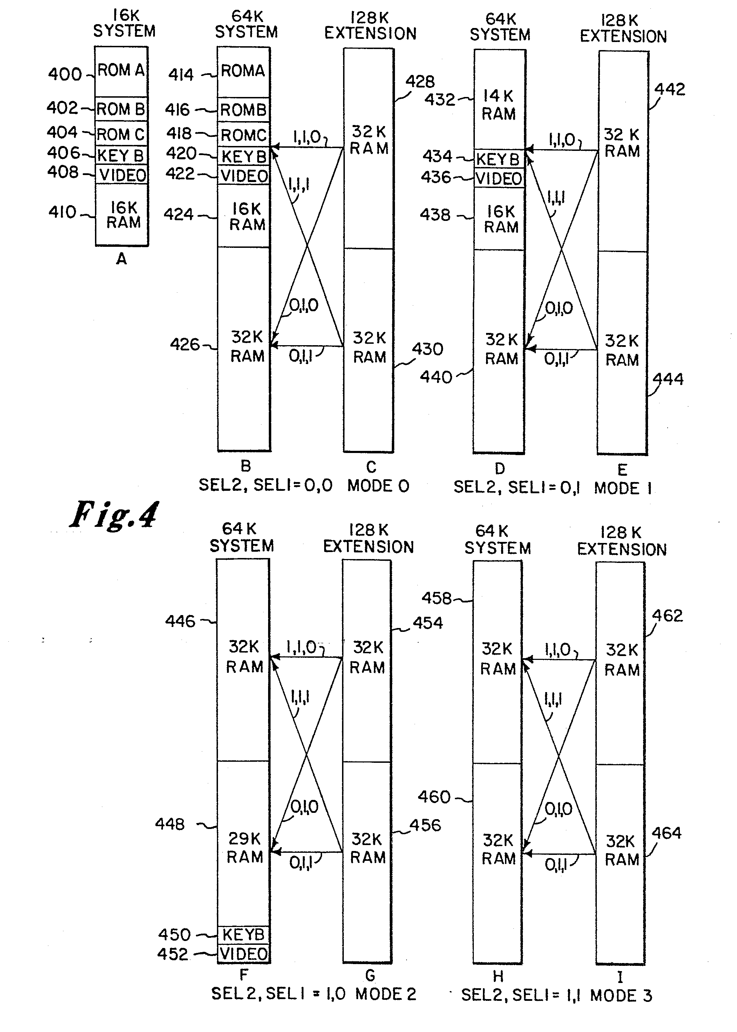

In addition to the three separate memory sizes with which the mapping circuitry can operate, the illustrative memory mapping circuitry can store data in RAM array 250 in four distinct configurations or modes under control of signals SEL1 and SEL2. A diagrammatic illustration of these four configurations is shown in Figure 4.  The ability to easily reconfigure the memory is useful so that the illustrative computer system can operate with software which may have originally written for other computer systems which have different memory configurations.

The first mode shown in Figure 4 is designated as "mode 0" and the memory mapping circuitry enters this mode when the signals on leads SEL2 and SEL1 are set to 0,0 respectively (both signals "low").  In mode 0, the RAM array can have three sizes - 16K, 64K or 128K.  The memory size is normally set when the user purchases the computer system, however, in accordance with the invention, it can easily be changed without extensively rewiring the illustrative memory mapping circuitry.  Mode one is useful when the illustrative system must operate with software which was written for a computer system in which the operating system and perhaps an assembler or interpreter is stored in ROM memory.

The detailed configuation of the 16K size memory is shown in column A.  Column A is a diagramatic representation of all of the address codes available in the computer system (its "address space").  The address codes consist of code numbers starting with the low number codes represented by the top of column A and ending with the high number codes at the bottom of the column.  This column indicates how the available memory space is allocated among the various system parts that use it.  In the illustrative embodiment, the 16K memory size system is arranged so that approximately 14,000 address codes (the lower 14K of address space) is used to access ROM A, ROM B and ROM C.  In particular, the address codes used to access the memory space in ROM A occupy the lowest 8K of memory (address space 400).  Address codes for ROM B occupy the next 4K of address space, 402.  ROM C codes occupy the next highest 2K of address space, 404.

The next 1K of address codes are dedicated to the keyboard buffer 406.  This area is used to temporarily store information received from the system keyboard.  The following

1K of address codes are dedicated to the video RAM 408. This memory space is used to temporarily store information to be displayed on the video screen.

Located immediately above the video RAM space 408 are 16K of address codes (address space 410) which can be used to access a 16K portion of memory array 250 under user control.

The 64K memory size system configuration is shown in column B. As with the 16K size system, the lower 14K of address space is used to access ROMS A, B and C in 8K, 4K and 2K blocks 414, 416 and 418. The next 2K of address space is devoted to the keyboard buffer and video RAM 420 and 422, respectively. As with the 16K system, the next 16K of address space located in block 424 is under user control. However, in the 64K system an additional 32K of address space in block 426 is now available for access by the user.

The 128K size "extension" is shown in column C. When the memory is configured for 128K size it includes the 64K of address codes shown in column B plus an additional 64K of address codes divided into 32K blocks 428 and 430.

As previously mentioned, in the illustrative embodiment, the 8-bit CPU has only sixteen address leads and thus is capable of directly addressing only 64K of memory. Thus, the additional 32K blocks 428 and 430 must be "mapped" onto the 64K of memory which is directly addressable by the CPU. This mapping is accomplished by storing additional information in the options register 216, which information is used by the illustrative memory mapping system to translate the address information produced by the CPU into codes which can be used to access blocks 428 and 430.

In particular, three signals are stored on the options register 216 by the software program running in CPU 100 when access to blocks 428 Or 430 is desired. These signals are are designated as the FXUPMEM (or FUM) signal, the MBIT2 signal and the MBIT1 signal. The arrows shown in Figure 4 indicate how blocks 428 and 430 are mapped onto the 64K system in accordance with the values of the FXUPMEM, MBIT2 and MBIT1 signals.  Specifically, when the three selection signals FXUPMEM, MBIT2, MBIT1 are set by the CPU to 1,1,0 ("high", "high" and "low") respectively, block 428 "maps" onto the lower 32K of the 64K system.  When "mapped" in this way, when the CPU places address signals on its leads which would normally cause it to address a location in the 16K RAM unit 424 the memory mapping circuitry translates these signals and causes a corresponding location in block 428 to be accessed instead.  Similarly, if the FXUPMEM, MBIT2, MBIT1 signals are a 0,1,1, respectively, then access to a location in 32K block 426 will instead access a location in block 430.  The other mapping combinations are depicted by the remaining arrows.

A second memory configuration mode designated as mode 1 and is shown in columns D and E.  This mode is selected when the SEL2 and SEL1 signals are 0 and 1, respectively.  In this configuration, the illustrative system has two memory size options, a 64K system and a 128K system extension.  The 64K system is similar to the 64K system in mode 0 with the exception that the address space which was previously devoted to ROMS A, B and C (the lower 14K of address space) is now allocated to an additional 14K RAM unit under user control, shown as block 432.  This configuration has the advantage that the user can use the 16K of address space previously dedicated to the ROM memory to access an additional 16K of RAM memory. Since the system can shift between configuration modes under software control during program operation, both the ROM memory and the additional 16K of RAM memory can be used at different portions of the program.

In particular, in mode 1, the illustrative memory management circuit disables the ROM units and instead causes the RAM unit 250 to be responsive to the lower 14K of addresses.  The 1K portions of the memory devoted to the keyboard buffer and video RAM (blocks 434 and 436) remain as previously shown and also the 16K and 32K RAM sections designated as blocks 438 and 430 also remain as in the mode 0, 64K size.

Similarly, with the 128K expansion mode shown in column E the additional 32K blocks 442 and 444 are mapped onto the 64K system in a manner similar as previously described with the mode 0 configuration.

Another configuration designated as mode 2 is selected by a 1 and 0 signal on the SEL2 and SEL1 leads, respectively. This mode is similar to the mode 1 except that the keyboard buffer and the video RAM address areas are moved into the upper portion of the second 32K block of address space. Thus, the lowest portion of the address space is a 32K portion 446 allocated to user-controlled RAM. Portion 446 is followed by a 29K section 448 allocated to user-controlled RAM which is, in turn, followed by the keyboard buffer 450 address area and the video RAM address area 452. In the 128K system, the additional 32K RAM sections 454 and 456 map as previously described with mode 0.

A final mode, designated as mode 3, is selected by placing a "1" signal on the SEL2 and SEL1 leads, respectively. In this mode, the entire memory is divided into four 32K size blocks of address space, 458, 460, 462 and 464. Blocks 458 and 460 are directly accessible and blocks 462 and 464 are mapped onto blocks 458 and 460 in a manner as previously described from mode 0. Since this memory configuration provides no space dedicated to either a keyboard buffer or a video RAM, there is no provision for providing input or output operations to the system. However, this configuration is useful in certain computation operations in which the system is performing a large number of internal computations in which no input or output is needed. Thus, the system can switch into mode 3, perform computations without wasting time scanning the keyboard or providing graphics capability, and then switch out of mode 3 into one of the other modes to provide input/output capability.

The selection of the particular configuration mode and the manner of the operation of the illustrative memory mapping circuitry will now be described in detail. In particular, the selection of the modes is carried out under software control by "writing" to the options register 216. This is a well-known operation in which the CPU places particular "port" address assigned to the option register 216 on the address leads A2-A7. Simultaneously, information to be written into the options register is placed on data bus 258. The address code corresponding to the options register 216 is decoded by decoder circuitry 200 which provides an enable signal on lead 202 that clocks options register 216 entering the information on the data bus into the register stages.

The outputs from two of the register stages are connected to leads SEL1 and SEL2, respectively. These signals are provided to PAL logic module 214 to cause it to select the respective mode of operation. Three other stages of options register 216 are connected to the FXUPMEM lead 218, the MBIT1 lead 220 and the MBIT2 lead 222. These leads are connected to PAL logic 224 which uses the signals thereon (in the 128K size system) to generate memory control signals CAS1* and CAS2* which are provided to RAM 250 to control it in a manner which will be hereinafter described.

PAL logic 214 controls memory mapping for the 16K and 64k size systems. In accordance with the invention, in the 16K size, PAL logic 214 receives a "high" signal on SIXTN lead 213. This "high" signal is provided from voltage source 204 and resistor 206 and is used to tailor the memory mapping to the 16K size configuration. More particularly, in response to the SEL1, SEL2 and SIXTN signals, PAL logic 214 decodes address signals on leads A10-A15 provided from address bus 240 and provides signals on five output leads to control the operation of the ROMs 104, 110 and 116 and RAM array 250. In addition, with a "high" signal on the SIXTN lead 213, PAL module 214 ignores the mode selection signals on leads SEL1 and SEL2 because there is only one mode possible in a 16K size system. Specifically, if the computer system is configured in mode 0 and an access is made to a ROM dedicated area, PAL logic 214 provides a low enable signal on one of the appropriate leads 226, 228 and 230. These signals control ROMS 104, 110 and 116 to enable them to produce output signals as appropriate. Although the RAM array 250 also responds to the address signals on leads A0-A14, the outputs of the RAM array 250 are not connected to data bus 103 because PAL module 214 places a "low" signal on the MCYCEN lead 221 which "low" signal disables gate 217 which, in turn, prdouces a "high" signal on the RAMRD* lead 251 that disables bus drivers 252 (gate 217 normally receives an enabling signal at its left-hand input from conventional decoding circuitry that responds to coded function signals produced by CPU 100 during a memory read operation). In addition PAL module 214 places a "high" signal on lead DATACNT* which is provided to the left input of gate 219. During a ROM access the right input of gate 219 also receives a "high" signal from CPU 100 and thus applies a "high" signal to the BUSEN* lead 225 to disconnect data bus 103 from the remainder of the system by disabling drivers 120. The disabling of drivers 120 prevents data retrieved from ROMs 104, 110 or 116 from interfering with the remainder of the system.

During an access to RAM 250, PAL module 214 places a "high" signal on the MCYCEN lead 221 which enables gate 217 to produce a "low" signal on the RAMRD* lead 251. This "low" signal enables driver 252 to gate the outputs of RAM 250 onto data bus 258. In addition PAL module 214 places a "low" signal on the DATACNT* lead which enables gate 219 to produce a "low" signal on the BUSEN* lead which, in turn, connects the data bus to CPU 100 via transceivers 120 (gate 219 may also be enabled directly by CPU 100 during an input/output operation by placing a "low" signal on the righthand input of gate 219).

Similarly, if an access is made to the keyboard buffer section of the memory, a "low" signal is placed on the KEYB* lead 234 which enables keyboard output buffer 246 to transfer information via bus 256 to data bus 258.

An access to the video RAM section of the memory causes a "low" signal to appear in the VIDEO* lead 232 which enables the graphic circuitry in a well-known manner.

In accordance with the invention, in order to place the memory in a 64K size configuration, the SIXTN lead 213 is grounded by means of a jumper lead 212 (shown as a dotted line) connected between terminals 208 and 209 either at the time of manufacture or at the time an upgrade is made. The "low" ground signal causes PAL module 214 to respond to the SEL1 and SEL2 inputs which allow the memory to mapped into either of the four modes previously described. However, also in accordance with the invention, when the system is operating in the 64K size, PAL logic 224 is not plugged into its socket so that the FXUPMEM, MBIT1 and MBIT2 signals which may be produced on leads 218, 220 and 222 by options register 216 (if an improper access is attempted) will have no effect.

In order to place the system in the 128K size configuration, PAL logic 224 is inserted into its socket so that in response to the FXUPMEM, MBIT1 and MBIT2 signals on leads 218, 220 and 222 it selectively generates memory control signals CAS1* and CAS2*. PAL module 224 also receives additional input signals which it uses to generate the outputs CAS1* and CAS2*. These inputs include a CAS signal generated by conventional memory timing circuitry and may also include two other signals, EXT* and MAPON which can be used to disable the PAL module if memory mapping is to be performed by circuitry other than the illustrative circuitry (if MAPON is "low" no mapping is done by the PAL module 224, similarly a "low" signal on the EXT* lead will disable PAL module 224). The CAS1* and CAS2* signals are used, as will be hereinafter described, to control the bank of RAMs which responds to address signals, allowing different 32K blocks of memory to activated in reponse to the same address signals.

Figure 3 shows the internal arrangement of RAM array 350. Array 350 consists of sixteen sockets into which can be plugged random access memory integrated circuits which are of the conventional "dynamic" RAM type. The sixteen sockets are arranged in two sets - each set consisting of eight sockets.

One set of eight sockets is shown on the lefthand side of Figure 3. Of these eight sockets only sockets 372 and 374 are shown for clarity. The remaining eight sockets are shown on the righthand side of Figure 3 of which only sockets 376 and 378 are shown for clarity. In addition, for clarity some conventional leads such as power supply leads and strobe signal leads have been omitted. Additional jumper wires are used to connect power supplies to the proper input pins of the memories for each memory configuration.

In particular, the conventional random access memories used in the illustrative embodiment require address input multiplexing to reduce the number of pins required on the integrated circuit packages. The required multiplexing is performed by multiplexer 370 which is controlled by CPU 100 via conventional memory control circuitry (not shown). Multiplexer 370 receives address leads A0-A14 from the address bus 342 and lead MPA15 from PAL logic unit 224 over lead 364.

The output of multiplexer 370 consists of eight address signal leads which can be connected by the multiplexer circuitry to either the signals on address leads A0-A7 or the signals on address leads A8-A14 and lead MPA15, depending on the selection signals provided by the CPU unit. Seven of the outputs of multiplexer 370 are wired in parallel to the address inputs A0-A6 of the sixteen sockets. The eighth output is wired to the A7 address inputs of the lefthand set of sockets and to terminal 380 to accomodate different memory circuits as will be hereinafter described.

The memory sockets are arranged so that the data inputs for memories in the corresponding memory sets are connected in parallel. For example, the data input of memory 372 is connected in parallel to the data input of memory 376. Likewise, the data outputs of corresponding memories in each of the socket sets are also connected in parallel. For example, the data output of memory 372 is connected in parallel to the data output of 376.

When the system is configured in the 16K memory size, a 16K X 1 memory circuit is inserted into each of eight sockets 376-378. A suitable memory for use with the illustrative 16K embodiment is a model 4116 dynamic RAM manufactured by Motorola Semiconductor Products, Inc., 3501 Ed Bluestein Boulevard, Austin, Texas, 78721. The operation of this memory is well-known and will not be described further herein. In the 4116 memory the input labelled "A7" in Figure 3 must be connected to a positive 5 volt supply. ─In order to do this, the A7 inputs of the righthand set of sockets is connected to terminal 382. This terminal may be connected by a jumper wire to either terminal 384 and positive supply 386 or to terminal 380 and the output A7 of multiplexer 370. In the 16K configuration the jumper is connected between terminal 382 and 384 to connect the positive supply to the A7 input.

When the memory is configured in the 64K size, eight 64K X 1 memory chips are inserted in sockets 376 and 378. In addition, terminal 382 is connected by a jumper to terminal 380 to connect address input A7 to the output of multiplexer 370. Address bit A7 is then under control of the output MPA15 produced by PAL module 224 when an access is made to the upper 32K address space of the 64k memory. A suitable memory for use with the illustrative 64K embodiment is a model 6665 dynamic RAM manufactured by Motorola Semiconductor Products, Inc., 3501 Ed Bluestein Boulevard, Austin, Texas, 78721.

Similarly, when a 128K size memory configuration is used all of the sixteen sockets are filled with model 6665 64K X 1 memory circuits. Selection between the memories inserted in the lefthand set of sockets and memories inserted in the righthand set of sockets is under control of the CAS1* and CAS2* signals generated by PAL module 224. Memories in the lefthand socket set (sockets 372, 374 and others not shown) are controlled by the CAS2* signal on lead 362. Similarly, memories in the righthand socket set consisting of sockets 376, 378 and other sockets not shown are controlled by the CAS1* signal on lead 360. The CAS1* and the CAS2* are generated by PAL module 224 in response to the signals on address leads A15 and A16 and the mapping signals FXUPMEM, MBIT1 and MBIT2 as previously described.

Claims

1. Address mapping circuitry for use with a plurality of computer systems, each having a central processing unit for generating address signals, a register for storing a plurality of mapping code signals and a memory responsive to memory control signals for storing and retrieving data in a plurality of storage locations, wherein the total number of said storage locations may vary from computer system to computer system, said mapping circuitry comprising,

a first logic circuit having a variable logic configuration and being responsive to a said address signals for generating a first set of memory control signals,

manually actuable means for changing the logic configuration of said first logic circuit according to the total number of storage locations in said memory so that each of said storage locations can be accessed by said central processing unit when said total number of locations is less than a predetermined number, and

a second logic circuit connected to said memory when said total number of storage locations exceeds said predetermined number and being responsive to said address signals and to said code signals for generating a second set of memory control signals so that each of said storage locations can be accessed by said central processing unit.

2. Address mapping circuitry according to Claim 1 wherein said first logic circuit is responsive to said code signals for selectively changing the memory location accessed by a particular address signal.

3. Address mapping circuitry according to Claim 1 wherein said manually actuable means comprises at least one signal lead and means to selectively connect said signal lead to a "high" and "low" signal source.

4. Address mapping circuitry according to Claim 3 wherein said connection means comprises a jumper wire.

5. Address mapping circuitry according to Claim 4 wherein said first logic circuit comprises a first PAL module.

6. Address mapping circuitry according to Claim 5 wherein said second logic circuit comprises a second PAL module.

7. Address mapping circuitry for use with a plurality of computer systems, each having a central processing unit for generating address signals, a register for storing a plurality of mapping code signals and a memory responsive to memory control signals for storing and retrieving data in a plurality of storage locations, wherein the total number of said storage locations may vary from computer system to computer system and may be one of a first total number, a second total number or a third total number, said mapping circuitry comprising,

a first PAL circuit having a variable logic configuration and a configuration lead and being responsive to a said address signals and a signal on said configuration lead for generating a first set of memory control signals,

means for selectively applying a first configuration signal to said configuration lead to change the logic configuration of said first PAL circuit when said memory has a total number of locations equal to said first total number so that each of said storage locations can be accessed by said central processing unit,

means for selectively applying a second configuration signal to said configuration lead to change the logic configuration of said first PAL circuit when said memory has a total number of locations equal to said second total number so that each of said storage locations can be accessed by said central processing unit, and

a second logic circuit connected to said memory when said total number of storage locations is equal to said third total number of locations and being responsive to said address signals and to said code signals for generating a second set of memory control signals so that each of said storage locations can be accessed by said central processing unit.

8. Address mapping circuitry according to Claim 7 wherein said means for selectively applying a first configuration signal to said configuration lead comprises means for connecting said configuration lead to a voltage source of a first fixed value.

9. Address mapping circuitry according to Claim 8 wherein said means for selectively applying a first configuration signal to said configuration lead comprises means for manually connecting said configuration lead to a voltage source having a voltage of a second fixed value.

10. Address mapping circuitry according to Claim 9 wherein means for connecting said configuration lead to a voltage source of a first fixed value is a resistor.

11. Address mapping circuitry according to Claim 10 wherein means for connecting said configuration lead to a voltage source of a second fixed value is a jumper wire.

Fig.1

Fig.2

0123248

Fig.3

Fig.4

0123248

4 / 4